# EUROPÄISCHE PATENTANMELDUNG

(11) **EP 4 155 056 A1**
(43) Veröffentlichungstag der Anmeldung: **29.03.2023**
(21) Anmeldenummer: 22164212.7
(22) Anmeldetag: 24.03.2022
(51) Int. Cl.: B29C 51/10, B29C 51/08, B29C 51/04, B29L 31/00

(54) **FORMSTATION FÜR EINE TIEFZIEHVERPACKUNGSMASCHINE, TIEFZIEHVERPACKUNGSMASCHINE, DEREN VERWENDUNG SOWIE VERFAHREN ZUM TIEFZIEHEN EINER KUNSTSTOFFFOLIE**

(30) Priorität: 23.09.2021 DE 102021124720
(71) Anmelder: VARIOVAC PS SystemPack GmbH, 19246 Zarrentin am Schaalsee (DE)
(72) Erfinder: Kröger, Holger, 23911 Schmilau (DE)
(74) Vertreter: Müller Schupfner & Partner Patent- und Rechtsanwaltspartnerschaft mbB

(57) **Zusammenfassung**

Die vorliegende Erfindung betrifft eine Formstation für eine Tiefziehverpackungsmaschine mit einem Formwerkzeugoberteil und einem Formwerkzeugunterteil, welche zueinander bewegbar sind. Am Formwerkzeugoberteil ist bei einer Bewegung des Formwerkzeugoberteils in Richtung des Formwerkzeugunterteils in fester Beabstandung ein Formstempel angeordnet ist. Das Formwerkzeugoberteil und das Formwerkzeugunterteil bilden in geschlossenem Zustand einen Formraum aus, in welchem der Formstempel angeordnet ist ohne das Formwerkzeugunterteil zu berühren. Weiterhin umfasst die vorliegende Erfindung eine Tiefziehverpackungsmaschine, deren Verwendung zum Verpacken von Lebensmitteln sowie ein Verfahren zum Tiefziehen einer Kunststofffolie in einer Formstation.

## Beschreibung

Die vorliegende Erfindung betrifft eine Formstation für eine Tiefziehverpackungsmaschine, wobei die Formstation ein Formwerkzeugoberteil und ein Formwerkzeugunterteil aufweist, welche jeweils zueinander bewegbar sind und wobei am Formwerkzeugoberteil bei einer Bewegung des Formwerkzeugoberteils in Richtung des Formwerkzeugunterteils in fester Beabstandung ein Formstempel angeordnet ist. Das Formwerkzeugoberteil und das Formwerkzeugunterteil bilden in geschlossenem Zustand einen Formraum aus, in welchem der Formstempel angeordnet ist ohne das Formwerkzeugunterteil zu berühren. Weiterhin umfasst die vorliegende Erfindung eine Tiefziehverpackungsmaschine, deren Verwendung zum Verpacken von Lebensmitteln sowie ein Verfahren zum Tiefziehen einer Kunststofffolie in einer Formstation.

### Stand der Technik

Tiefziehverpackungsmaschinen mit Formstation sind aus dem Stand der Technik bekannt. So offenbart beispielsweise DE 102008013264 A1 eine Tiefziehverpackungsmaschine mit einer Formstation, die einen Stempel (Streckhelfer) aufweist um eine erwärmte Kunststofffolie in eine Formmulde zu formen. Die Kunststofffolie wird dabei gestreckt und durch ein anliegendes Vakuum im Bereich der Formmulde und evtl. noch mit zusätzlicher Druckluft von der Seite des Streckhelfers in die Formmulde geformt. Dort kühlt sie ab und anschließend öffnen sich die Formwerkzeuge, um die Mulde zum einer Befüllungsanlage, wo diese mit einem Füllgut befüllt wird, zuzuführen.

DE 102012018974 offenbart eine Tiefziehverpackungsmaschine mit einer Formstation, bei der der Formstempel mit einem Formwerkzeugunterteil in Kontakt stehend einen inneren und einen äußeren Formraum ausbilden, welche mit unterschiedlichen Drücken beaufschlagbar sind.

Auf Tiefziehverpackungsmaschinen werden in der Formstation sogenannte Hartfolien und auch Weichfolien zu nach oben offenen Behältnissen, wie Mulden, Bechern oder Behältern verformt. Diese Kunststofffolien bestehen beispielsweise aus Polypropylen, Polyethylen, Polyester, Polystyrol, PVC und anderen Thermoplasten. Übliche Folienstärken betragen 50 bis 1500 µm. Die Kunststofffolien können auch als Verbundfolien aus mehreren Thermoplasten hergestellt sein.

Verpackungen bestehen häufig aus zusammengeführten Kunststofffolien (Folien). Derartige Folien werden auf Verpackungsmaschinen in der Regel in Form von Folienbahnen verarbeitet.

Hierzu werden die Folienbahnen in Fördermitteln geführt und von Schneidwerkzeugen in definierte Folienabschnitte unterteilt. Herkömmliche Verpackungen bestehen oft aus einer in Mulden geformten Unterfolie und einer darauf gesiegelten Oberfolie.

Verpackungen aus einer in Mulden geformten Unterfolie, in die Mulde eingebrachtem Verpackungsgut und einer auf die Mulde gesiegelten Oberfolie sind seit langem bekannt. Diese werden auf Tiefziehverpackungsmaschinen erstellt. In derartigen Verpackungsmaschinen wird die Unterfolie von einer Rolle abgezogen und taktweise mit einer Folientransportkette, auch als Kluppenkette oder Klammerkette bezeichnet, transportiert. In der Formstation werden üblicherweise aus der flachen Unterfolie Mulden geformt. Dies geschieht beispielsweise durch Beaufschlagung mit Druckluft und/oder durch Anlegen eines Vakuums und/oder durch einen Formstempel. In die Mulden werden Verpackungsprodukte manuell oder automatisch eingelegt bzw. mit flüssigem Füllgut befüllt. Nach der Bestückung mit den Verpackungsprodukten wird die Oberfolie hinzugefügt, die in einer Siegelstation auf die Unterfolie aufgesiegelt wird, um so abgeschlossene Behältnisse zu schaffen. Die Oberfolie zum Verschließen der Packungen wird von oben her an die Unterfolie herangeführt und liegt nachfolgend parallel auf der Unterfolie auf, um zum Siegelwerkzeug geführt zu werden. Das Aufsiegeln erfolgt auf die im Wesentlichen ebenen Ränder, die die ausgeformten Mulden der Unterfolie umgeben.

Problematisch bei den bisher aus dem Stand der Technik bekannten Tiefziehverpackungsmaschinen und den damit hergestellten Verpackungen ist unter anderem, dass die bisher bekannten Tiefziehverfahren beziehungsweise die bisher bekannten Tiefziehverpackungsmaschinen ohne einen Formstempel ein schlechtes Formungsergebnis bei einem ungünstigen Ziehtiefenverhältnis liefern, also dem Verhältnis von Durchmesser der Formmulde zur Tiefe der Formmulde. Bei Ziehtiefenverhältnissen von ca. 1 oder weniger ist die Folienstärke am Boden der Formmulde oftmals nur sehr gering, verglichen mit der ursprünglichen Folienstärke und verglichen mit der Folienstärke am oberen Rand der Formmulde. Dies ist jedoch unerwünscht, da es dadurch oft zu Brüchen oder Rissen und/oder ungewollten Verformungen der fertigen Formmulden innerhalb der Verpackung zum Beispiel beim Transport kommen kann was zu Reklamationen führt und somit unerwünscht ist. Auch kann ein schlechtes Ziehtiefenverhältnis und die damit einhergehende geringe Folienstärke im Bodenbereich (schlechte Folienstärkeverteilung) die Haltbarkeit von in den Tiefziehverpackungen verpackten Lebensmitteln negativ beeinträchtigen. Dies wird bisher unter anderem dadurch gelöst, dass dicke bzw. starke Folien eingesetzt werden, mit welchen Formmulden realisierbar sind, welche im Bodenbereich eine ausreichende bzw. für den Abnehmer eine zufriedenstellende Bodendicke aufweisen. Dies ist jedoch unwirtschaftlich, da dadurch unnötige Ressourcen verbraucht werden.

Bei Einsatz eines herkömmlichen Formstempels (herkömmlicher Formstempel meint, dass dieser erst bei geschlossener Formstation in die Formmulde einfährt) wird die Leistung der Tiefziehverpackungsmaschine eingeschränkt, da ein zusätzlicher Schritt beim Formen erfolgen muss. Es besteht daher ein Bedarf an einer Tiefziehverpackungsmaschine und an einem Verfahren, mit dem eine verbesserte Folienstärkenverteilung in der tiefgezogenen Folie, insbesondere im Boden-, Ecken- und Kantenbereich der tiefgezogenen Folien, sowie eine höhere, wirtschaftlichere Taktrate bei der Herstellung von tiefgezogenen Verpackungen und folglich schnellere Produktionsgeschwindigkeiten realisierbar ist. Dabei wäre es wünschenswert, wenn die Folienstärke im Boden-, Ecken und Kantenbereich der Formmulde bzw. der Verpackung so ausgestaltet ist, dass eine ausreichende Stabilität der Packung erreicht wird und sich keine Beschädigungen in der tiefgezogenen Folie bilden, da dies zwangsläufig zum Ausschluss der tiefgezogenen Form führt und somit zusätzliche Kosten verursacht. Der Einsatz von dickeren bzw. stärkeren Folie ist oftmals keine wirtschaftlich sinnvolle Alternative, da dies zwangsläufig zu höheren Materialkosten führen würde und weiterhin nicht nachhaltig ist.

### Aufgabe der Erfindung

Aufgabe der vorliegenden Erfindung war es somit, eine Formstation für eine Tiefziehverpackungsmaschine, eine Tiefziehverpackungsmaschine selbst sowie ein Verfahren bereitzustellen, womit es möglich ist, eine erhöhte Taktrate während des Tiefziehverfahrens, bei einer verbesserten Folienstärkenverteilung innerhalb der Tiefziehverpackung zu realisieren. Weiterhin war es eine Aufgabe der vorliegenden Erfindung eine Formstation, eine Tiefziehverpackungsmaschine sowie ein Verfahren bereitzustellen, womit Verpackungen hergestellt werden können, welche bei ungünstigen Ziehtiefenverhältnissen, d.h. bei Ziehtiefenverhältnissen von ≤ 1 eine zufriedenstellende Folienstärke in den kritischen Bereichen wie beispielsweise Boden-, Ecken- und Kantenbereich aufweisen, wodurch sich die eingesetzte Folienstärke bzw. Foliendicke für tiefgezogene Folien reduzieren lässt. Auch bei Packungen mit einem günstigeren Ziehtiefenverhältnis von ≥ 1 soll durch eine günstigere Folienstärkenverteilung innerhalb der Packung die Folienstärke der Ursprungsfolie reduziert werden. Mit so einem Verfahren ließen sich bei gleicher Packungsqualität die herkömmlichen erforderlichen Folienstärken reduzieren.

### Zusammenfassung der Erfindung

Diese und weitere Aufgaben werden erfindungsgemäß durch den Inhalt der unabhängigen Patentansprüche gelöst. Bevorzugte Ausgestaltungen sind Inhalt der Unteransprüche bzw. werden nachfolgend genauer beschrieben.

Überraschenderweise wurde gefunden, dass mit einer Formstation, bei welcher sowohl das Formwerkzeugoberteil als auch das Formwerkzeugunterteil zu- und auseinander bewegbar sind, und bei der ein Formstempel während des Tiefziehverfahrens fest beabstandet am Formwerkzeugoberteil angeordnet ist, tiefgezogene Formen mit einem ungünstigen Ziehtiefenverhältnis, d. h. einem Ziehtiefenverhältnis von ungefähr 1 oder auch kleiner 1 vorteilhaft herstellbar sind, wobei bei diesen tiefgezogenen Formen, anders als bei herkömmlichen, aus dem Stand der Technik bekannten tiefgezogenen Formen, die Foliendicke der tiefgezogenen Folien im Boden-, Ecken- und Kantenbereich eine verbesserte (höhere) Dicke bzw. Stärke aufweist, insbesondere keine Risse oder Brüche oder dergleichen aufweist oder Zonen aufweist, wo die Materialstärke zu gering wird.

Weiterhin wurde überraschenderweise gefunden, dass mit dem erfindungsgemäßen Verfahren die Taktzahl einer Tiefziehverpackungsmaschine erhöht werden kann, in dem der Prozess des Tiefziehens in der Formstation um wenigstens einen Schritt gegenüber bisher herkömmlichen Verfahren verkürzt wird.

Die erfindungsgemäße Formstation für eine Tiefziehverpackungsmaschine weist ein Formwerkzeugoberteil sowie ein Formwerkzeugunterteil auf. Das Formwerkzeugoberteil und das Formwerkzeugunterteil sind jeweils zueinander als auch auseinander bewegbar. Das Formwerkzeugoberteil umfasst einen Formstempel, welcher zumindest bei einer Bewegung des Formwerkzeugoberteils in Richtung des Formwerkzeugunterteils fest beabstandet am Formwerkzeugoberteil angeordnet ist und sich in Richtung des Formwerkzeugunterteils erstreckt. Beim Schließen der Formstation, d. h. wenn das Formwerkzeugoberteil und das Formwerkzeugunterteil in Kontakt stehen, bilden diese einen Formraum aus, in welchem der Formstempel angeordnet ist und den Formraum teilweise ausfüllt. Der Formraum lässt sich mit Druck beaufschlagen und/oder kann vakuumiert werden, "fest beabstandet" meint, dass der Stempel eine feste Längenausdehnung hat.

Des Weiteren umfasst die vorliegende Erfindung eine Tiefziehverpackungsmaschine sowie ein Verfahren zum Tiefziehen einer Kunststofffolie, wobei das Formwerkzeugoberteil mit dem daran in einem festen Abstand angeordneten Formstempel in Richtung des Formwerkzeugunterteils bewegt wird und das Formwerkzeugunterteil in Richtung des Formwerkzeugoberteils bewegt wird. Die zwischen dem Formwerkzeugoberteil und dem Formwerkzeugunterteil angeordnete Folie wird wenigstens teilweise beim Bewegen des Formwerkzeugoberteils in Richtung des Formwerkzeugunterteils durch den Formstempel verformt. Danach wird das Formwerkzeugoberteil und das Formwerkzeugunterteil geschlossen, wobei die teilweise verformte Folie eingeklemmt wird und in dem ausgebildeten Formraum eine vorläufige Form aufweist. Anschließend wird der Formraum mit Druckluft beaufschlagt und/oder aber vakuumiert oder beides, wobei die Folie die endgültige (fertige) Form erhält welche.

### Detaillierte Beschreibung der Erfindung

Die erfindungsgemäße Formstation für ein Tiefziehverpackungsmaschine umfasst Formwerkzeugoberteil und ein Formwerkzeugunterteil, welche jeweils zueinander und auseinander beweglich sind, d.h. aufeinander zu und voneinander weg. An dem Formwerkzeugoberteil ist während der Bewegung des Formwerkzeugoberteils in Richtung des Formwerkzeugunterteils ein Formstempel fest beabstandet relativ zu dem Formwerkzeugoberteil angeordnet. Der Formstempel erstreckt sich in Richtung des Formwerkzeugunterteils und steht über ein unteres Ende des Formwerkzeugoberteils hinaus. Insbesondere ist der Formstempel während der Bewegung zum Schließen der Formstation, d. h. wenn das Formwerkzeugoberteil und das Formwerkzeugunterteil sich berühren und einen Formraum ausbilden, fest beabstandet am Formwerkzeugoberteil angeordnet. Weiter bevorzugt ist der Formstempel während der gesamten ordnungsgemäßen Anwendung der Formstation bzw. der Tiefziehverpackungsmaschine fest am Formwerkzeugoberteil angeordnet. Ordnungsgemäße Anwendung meint im Sinne der vorliegenden Erfindung den Betrieb einer Tiefziehverpackungsmaschine mit einer Formstation, bei der eine Kunststofffolie über eine Zufuhrrolle der Formstation zugeführt wird, wobei die Kunststofffolie vor dem Formgebungsprozess (Tiefziehprozess) in der Formstation auf eine Temperatur erhitzt wird, die eine plastische Verformung zur fertigen Form einer Formmulde ermöglicht. Dies erfolgt zum Beispiel mittels einer Heizvorrichtung (Vorheizstation). Im Sinne der vorliegenden Erfindung ist es möglich, dass der Formstempel beim sogenannten Anfahrprozess der Tiefziehverpackungsmaschine in dem Formwerkzeugoberteil ein- und/oder ausfahrbar ist. Anfahrprozess meint beispielsweise den Prozess, während dessen die Tiefziehverpackungsmaschine mit neuer Kunststofffolie bestückt wird und währenddessen die Kunststofffolie beim ersten Anlauf noch nicht auf eine ausreichende Temperatur in der Heizvorrichtung erhitzt wurde. Es ist somit denkbar, dass die erfindungsgemäße Tiefziehverpackungsmaschine von einem Anwender beispielsweise über eine Steuerungsvorrichtung zwischen Anfahrprozess und ordnungsgemäßer Anwendung geschaltet werden kann und dass beim Umschalten von Anfahrprozess auf ordnungsgemäße Anwendung der Formstempel in die feste Position ausfährt. Während der ordnungsgemäßen Anwendung ist der Formstempel zumindest während der Bewegung des Formwerkzeugoberteils in Richtung des Formwerkzeugunterteils fest beabstandet an diesem angeordnet, bevorzugt auch während der entgegengesetzten Bewegung des Formwerkzeugoberteils, weg von dem Formwerkzeugunterteil zum Öffnen der Formstation.

Erfindungsgemäß sind sowohl das Formwerkzeugoberteil als auch das Formwerkzeugunterteil zueinander und auseinander bewegbar. Dabei bewegt sich zu Beginn einer ordnungsgemäßen Anwendung der erfindungsgemäßen Formstation in einer Ausgestaltung das Formwerkzeugoberteil von der Ausgangsposition in die Endposition abwärts, und das Formwerkzeugunterteil von der Ausgangsposition in die Endposition aufwärts. Die Endposition meint dabei die Position, an der das Formwerkzeugoberteil auf dem Formwerkzeugunterteil aufliegt bzw. das Formwerkzeugoberteil und das Formwerkzeugunterteil direkt miteinander in Kontakt stehen. Im Sinne der vorliegenden Erfindung ist die Formstation in dieser Position, d. h. wenn das Formwerkzeugoberteil auf dem Formwerkzeugunterteil aufliegt, die Folie zwischen sich festlegen und beide Teile miteinander in Berührung stehen, geschlossen.

In einer bevorzugten Ausgestaltung ist es möglich, dass zum Schließen der Formstation die Bewegungen des Formwerkzeugoberteils und des Formwerkzeugunterteils konzertiert ablaufen. Dies bedeutet, dass zum Schließen der Formstation das Formwerkzeugoberteil abgesenkt wird und konzertiert das Formwerkzeugunterteil angehoben wird. Konzertiertes Schließen und Öffnen der Formstation ist beispielsweise über eine mechanische Kopplung des Formwerkzeugoberteils und des Formwerkzeugunterteils möglich. In einer weiteren bevorzugten Ausgestaltung ist es möglich, dass sich das Formwerkzeugober- und Formwerkzeugunterteil horizontal zueinander bzw. auseinander bewegen.

In der geschlossenen Position bilden das Formwerkzeugoberteil und das Formwerkzeugunterteil einen Formraum aus. In einem anwendungsgemäßen Zustand befindet sich zwischen Formwerkzeugoberteil und Formwerkzeugunterteil eine Folie, welche tiefgezogen wird. Das Formwerkzeugunterteil umfasst vorzugsweise wenigstens eine Formmulde, welche die Form des Formraumes und damit die Form der tiefgezogenen Kunststofffolie bestimmt. Das Formwerkzeugoberteil und das Formwerkzeugunterteil bewegen sich vorzugsweise orthogonal zu der Kunststofffolie, welche sich in einem anwendungsgemäßen Zustand zwischen dem Formwerkzeugober- und -unterteil befindet. Üblicherweise bewegt sich die Kunststofffolie horizontal zur Erdoberfläche, so dass in dieser Ausgestaltung zum Schließen der Formstation das Formwerkzeugoberteil abgesenkt und das Formwerkzeugunterteil angehoben werden.

Der Formstempel ist so ausgestaltet, dass dieser die Formmulde des Formwerkzeugunterteils nicht berührt. Vorzugsweise ist der Formstempel so am Formwerkzeugoberteil angeordnet, dass das Volumen des Formraums der geschlossenen Formstation zu wenigstens 30% durch den Formstempel ausgefüllt ist, weiter bevorzugt wenigstens 40%des Volumens, noch weiter bevorzugt wenigstens 50%, insbesondere bevorzugt wenigstens 60% oder wenigstens 70% des Volumens des Formraums durch den Formstempel ausgefüllt ist.

Bei den eingesetzten Kunststofffolien handelt es sich um sogenannte Hartfolien oder Weichfolien, welche mit dem erfindungsgemäßen Verfahren in der erfindungsgemäßen Formstation zu nach oben offenen Behältnissen, wie Mulden, Bechern oder Behältern verformt werden. Diese Folien bestehen z. B. aus Polypropylen, Polyethylen, Polyester, Polystyrol, Polyvinylchlorid (PVC) und anderen Thermoplasten. Übliche Folienstärken betragen 150 bis 1500 µm. Die Folien können auch als Verbundfolien aus mehreren Thermoplasten hergestellt sein.

Es ist auch möglich, dass das Formwerkzeugunterteil mehrere Formmulden umfasst. Das Formwerkzeugoberteil weist mindestens einen Formstempel auf, welcher bei einer Bewegung des Formwerkzeugoberteils in Richtung des Formwerkzeugunterteils fest beabstandet am Formwerkzeugoberteil angeordnet ist. Das Formwerkzeugoberteil weist in einer weiteren Ausgestaltung mehrere fest beabstandete Formstempel auf, wobei das Formwerkzeugunterteil mehrere Formmulden aufweist. In einer bevorzugten Ausgestaltung entspricht die Anzahl an fest beabstandeten Formstempeln der Anzahl der Formmulden des Formwerkzeugunterteils. Die Formstempel sind dabei so ausgestaltet, dass diese die Formmulden des Formwerkzeugunterteils nicht berühren beziehungsweise nicht mit diesen in Kontakt kommen, insbesondere nicht, wenn die Formstation geschlossen ist.

Der Formstempel ist vorzugsweise mit einem ersten Ende fest beabstandet am Formwerkzeugoberteil angeordnet, und erstreckt sich weiter bevorzugt zumindest mit einem dem ersten Ende gegenüberliegenden zweiten Ende über ein unteres Ende des Formwerkzeugoberteils. Dies bedeutet, dass der Formstempel den Formraum teilweise ausfüllt, welcher sich in geschlossener Position des Formwerkzeugoberteils und Formwerkzeugunterteils ausbildet. Erfindungsgemäß berührt der Formstempel das Formwerkzeugunterteil bzw. die Formmulde(n) des Formwerkzeugunterteils nicht. Der Formraum kann mit Druck beaufschlagt werden und/oder vakuumiert werden, insbesondere kann der Formraum mit Druckluft beaufschlagt werden, um die endgültige Form der in einem anwendungsgemäßen Zustand im Formraum befindlichen Folie herzustellen. Vorzugsweise erfolgt das Beaufschlagen des Formraumes mittels Druckluft über dem einschlägigen Fachmann bekannte Öffnungen im Formwerkzeugoberteil, beziehungsweise erfolgt ein mögliches Vakuumieren vorzugsweise über eine Vorrichtung im Formwerkzeugunterteil, beispielsweise Öffnungen im Formwerkzeugunterteil. Ebenfalls ist es möglich, dass der Formraum sowohl mit Druckluft beaufschlagt werden als auch vakuumiert werden kann. Dieser Schritt kann in einer Ausgestaltung konzertiert erfolgen, d.h. der Formraum wird durch Druckluft aus dem Formwerkzeugoberteil mit Druckluft beaufschlagt und dabei gleichzeitig durch eine geeignete Vorrichtung im Formwerkzeugunterteil vakuumiert, wodurch die in einem anwendungsgemäßen Zustand zwischen Formwerkzeugoberteil und Formwerkzeugunterteil befindliche Folie in der Formmulde eine endgültige Form erhält. Die Anordnung solcher Öffnungen zum Beaufschlagen mit Druckluft und/oder zum Vakuumieren sind dem einschlägigen Fachmann bekannt und beispielsweise in DE 3109814 A1 beschrieben. Es kann bevorzugt sein, dass die Druckluft erhitzt ist, insbesondere über 100°C.

Der Formstempel ist in einer bevorzugten Ausgestaltung beheizbar. Insbesondere kann es gewünscht sein, dass der Formstempel in etwa auf die gleiche Temperatur wie die zu formende Kunststofffolie beheizbar ist, bevorzugt weist der Formstempel eine Temperatur auf, welche wenigstens 50% bis 150% der Temperatur der Folie, weiter bevorzugt mindestens 60% oder mindestens 80% der Temperatur der Folie entspricht. Die Heizvorrichtung ist der Formstation vorgeschaltet und erhitzt die Kunststofffolie auf einen bestimmten Temperaturbereich, bevor die Kunststofffolie der Formstation zugeführt wird. Dies ist insbesondere deshalb von Vorteil, weil die zu formende Kunststofffolie, welche beheizt wird bevor diese in die erfindungsgemäße Formstation eingeführt wird, schnell an Elastizität verliert und leicht reißt, sobald die Folie mit kälteren Gegenständen in Berührung kommt. Es ist daher auch in einer weiteren bevorzugten Ausgestaltung möglich, dass das Formwerkzeugunterteil beheizbar und/oder kühlbar ist, insbesondere kühlbar. Es kann gewünscht sein, dass das Formwerkzeugunterteil kühlbar ist, um die Aushärtung der geformten Folien in der endgültigen Form zu beschleunigen. Die Kühlung kann beispielsweise mittels Wasserkühlung in den Wandungen und/oder im Bodenbereich der Formmulde(n) erfolgen. In einer bevorzugten Ausgestaltung ist der Formstempel beschichtet, vorzugsweise teflonbeschichtet oder keramikbeschichtet. Der Formstempel kann unterschiedliche Formen aufweisen und dadurch die Folienstärkeverteilung beeinflussen. In einer weiteren bevorzugten Ausgestaltung ist das Formwerkzeugunterteil bzw. sind die Formmulden beschichtet, insbesondere teflonbeschichtet oder keramikbeschichtet. Dies kann gewünscht sein, da durch solch eine Beschichtung die fertige Form der tiefgezogenen Kunststofffolie einfacher aus dem Formwerkzeugunterteil bzw. aus der Formmulde herausführbar ist, wenn das Formwerkzeugteil abgesenkt wird, werden kann, da durch die Beschichtung ein Anhaften der tiefgezogenen Folie an der Formmulde vermindert wird.

Mit dem erfindungsgemäßen Verfahren zum Betrieb einer Tiefziehverpackungsmaschine kann gegenüber bisherigen Verfahren eine erhöhte Taktfrequenz erzielt werden. Dies ist durch Einsparung eines Arbeitsschrittes im Tiefziehprozess realisierbar, was insbesondere zu einer zeitlichen Ersparnis führt. Das erfindungsgemäße Verfahren umfasst die folgenden Schritte:
a) Bewegen des Formwerkzeugoberteils in Richtung des Formwerkzeugunterteils, wobei eine zwischen dem Formwerkzeugoberteil und Formwerkzeugunterteil angeordnete Folie teilweise durch den Formstempel verformt wird;
b) Bewegen des Formwerkzeugunterteils in Richtung des Formwerkzeugoberteils;
c) Schließen des Formwerkzeugoberteils und Formwerkzeugunterteils, wobei die zwischen dem Formwerkzeugoberteil und Formwerkzeugunterteil angeordnete teilweise verformte Folie eingeklemmt wird und eine vorläufige Form in dem ausgebildeten Formraum aufweist;
d) Beaufschlagen des Formraumes mit Druck; oder
e) Vakuumieren des Formraumes; oder
f) zunächst Schritt d) und anschließend Schritt e), oder zunächst Schritt e) und anschließend Schritt d), oder Schritt d) und Schritt e) konzertiert;
   wobei nach Schritt d) oder e) oder f) die Folie eine fertige Form aufweist;
g) ggf. Ausgleichen des Unterdruckes oder des Überdruckes innerhalb des Formraumes (bevorzugt wird dieser Schritt durchgeführt);
h) Bewegen des Formwerkzeugoberteils entgegengesetzt der Richtung des Formwerkzeugunterteils; und
i) Bewegen des Formwerkzeugunterteils entgegengesetzt der Richtung des Formwerkzeugoberteils.

Beim Bewegen des Formwerkzeugoberteils in Richtung des Formwerkzeugunterteils (Schritt a)) wird eine zwischen dem Formwerkzeugoberteil und dem Formwerkzeugunterteil befindliche Kunststofffolie durch den am Formwerkzeugoberteil angeordneten Formstempel teilweise verformt. Nach Schritt b) ist die Formstation geschlossen und das Formwerkzeugoberteil und das Formwerkzeugunterteil stehen in Kontakt zueinander. Dabei können die Schritte a) und b) zeitlich überlappend oder zeitlich parallel durchgeführt werden (vorliegend als "konzertiert" bezeichnet) oder zeitlich nacheinander. Dabei ist es unerheblich, ob zunächst das Formwerkzeugoberteil in Richtung des Formwerkzeugunterteils und anschließend das Formwerkzeugunterteil in Richtung des Formwerkzeugoberteils bewegt wird oder umgekehrt. Ebenfalls ist es möglich, dass das Bewegen des Formwerkzeugunterteils in Richtung des Formwerkzeugoberteils und das Bewegen des Formwerkzeugoberteils in Richtung des Formwerkzeugunterteils zeitlich versetzt abläuft. Vorzugsweise laufen die Schritte a) und b) konzertiert ab. In der geschlossenen Formstation ist die Folie zwischen dem Formwerkzeugoberteil und dem Formwerkzeugunterteil eingeklemmt und weist eine vorläufige Form in dem ausgebildeten Formraum auf. In diesem Schritt c) liegt die Folie zumindest teilweise an dem Formstempel an. Der Formstempel ist nicht in Kontakt mit dem Formwerkzeugunterteil. Im Schritt d) oder im Schritt e) oder im Schritt f) wird durch Beaufschlagen des Formraumes (Schritt d)) oder durch Vakuumieren des Formraumes (Schritt e)) bzw. durch Beaufschlagen mit Druckluft und anschließendem Vakuumieren bzw. durch Vakuumieren und anschließendem Beaufschlagen mit Druckluft (Schritt f)) die Folie in eine endgültige Form gebracht. Im Schritt f) kann der Formraum zunächst mit Druck beaufschlagt und anschließend vakuumiert werden, beziehungsweise auch zunächst vakuumiert und anschließend mit Druck beaufschlagt werden, oder aber auch gleichzeitig (konzertiert) mit Druckluft beaufschlagt und vakuumiert werden. Dabei wird eine in einem anwendungsgemäßen Zustand im Formraum befindliche Folie vom Formwerkzeugoberteil mit Druck beaufschlagt und/oder vom Formwerkzeugunterteil vakuumiert und erhält so eine endgültige Form, welche durch die Ausgestaltung der Formmulde bestimmt wird. Im darauffolgenden fakultativen Schritt g) wird der Formraum belüftet (dies kann sich auch einfach nur durch das Beabstanden von Formober- und Unterteil ergeben), wobei sich im Formraum ein Normaldruck (Atmosphärendruck) einstellt. In den darauffolgenden Schritten h) und i) wird dann das Formwerkzeugoberteil entgegen der Richtung des Formwerkzeugunterteils bewegt (Schritt h)) und das Formwerkzeugunterteil ebenfalls entgegen der Richtung des Fomwerkzeugoberteils bewegt (Schritt i)). Dabei können die Schritte h) und i) zeitlich nahezu parallel durchgeführt werden (konzertiert) oder zeitlich nacheinander. Dabei ist es unerheblich, ob zunächst das Formwerkzeugoberteil entgegen der Richtung des Fomwerkzeugunterteils bewegt und anschließend das Formwerkzeugunterteil entgegen der Richtung des Fomwerkzeugoberteils bewegt wird oder umgekehrt. Ebenfalls ist es möglich, dass beide Bewegungen zeitlich versetzt ablaufen. Vorzugsweise laufen die Schritte h) und i) konzertiert ab, wobei die fertige Form freigesetzt wird, welche anschließend in einer nachfolgenden Füllstation mit einem Füllgut befüllt wird.

Überraschenderweise wurde gefunden, dass mit dem erfindungsgemäßen Verfahren zumindest ein Arbeitsschritt während des Tiefziehverfahrens in der Formstation eingespart werden kann, was zu einer wesentlichen Zeitersparnis im Tiefziehprozess führt und wodurch sich wiederum die Taktzahl einer erfindungsgemäßen Tiefziehverpackungsmaschine erhöhen lässt. Herkömmliche, aus dem Stand der Technik bekannte Tiefziehverpackungsmaschinen, arbeiten üblicherweise so, dass eine aufgeheizte Kunststofffolie der Formstation zugeführt wird, wobei die aufgeheizte Folie üblicherweise direkt unterhalb des Formwerkzeugoberteils geführt wird. Dann wird in einem ersten Schritt zunächst das Formwerkzeugunterteil angehoben und die Formstation geschlossen. In einem zweiten Schritt wird dann ein Formstempel aus dem Formwerkzeugoberteil in Richtung des Formwerkzeugunterteils ausgefahren, wobei die in dem Formraum und zwischen Formwerkzeugoberteil und Formwerkzeugunterteil eingeklemmte, aufgeheizte Kunststofffolie in eine vorläufige Form gebracht wird. Anschließend wird der Formraum üblicherweise mit Druck, insbesondere mit Druckluft beaufschlagt oder aber vakuumiert oder beides. Die Druckluft kann dabei erhitzt sein, insbesondere auf eine Temperatur, die der Temperatur der erhitzten Folie in etwa entspricht, bevorzugt auf wenigstens 100°C oder mehr. Nach anschließendem Absenken des Formwerkzeugunterteils wird die fertig geformte Form freigesetzt.

Das erfindungsgemäße Verfahren unterscheidet sich somit gegenüber den aus dem Stand der Technik bekannten Verfahren dadurch, dass sowohl das Formwerkzeugoberteil als auch das Formwerkzeugunterteil zueinander bewegbar sind, vorzugsweise sich konzertiert zueinander bewegen, d. h. dass zum Schließen der Formstation wird in einer Ausgestaltung das Formwerkzeugoberteil abgesenkt wird und vorzugsweise in einem konzertierten Schritt das Formwerkzeugunterteil angehoben wird. Dadurch, dass der Formstempel zumindest während des Absenkens des Formwerkzeugoberteils fest beabstandet am Formwerkzeugoberteil angeordnet ist, wird somit bei dem erfindungsgemäßen Verfahren der Verfahrensschritt des Ausfahrens des Formstempels eingespart, was wiederum zu einer erheblichen Zeitersparnis des gesamten Tiefziehprozesses führt. Dadurch lässt sich mit dem erfindungsgemäßen Verfahren die Taktzahl der erfindungsgemäßen Tiefziehverpackungsmaschine deutlich gegenüber den Taktzahlen von Tiefziehverpackungsmaschinen, wie sie aus dem Stand der Technik bekannt sind, erhöhen. Somit kann mit dem erfindungsgemäßen Verfahren die Produktionsgeschwindigkeit wesentlich erhöht werden.

Darüber hinaus wurde überraschenderweise gefunden, dass mit der erfindungsgemäßen Tiefziehverpackungsmaschine und dem erfindungsgemäßen Verfahren tiefgezogene Formen mit einem Ziehtiefenverhältnis (Verhältnis von Durchmesser der Formmulde zu deren Tiefe) von ≤ 1 sowie ≥ 1 herstellbar sind, wobei bei diesen tiefgezogene Formen, anders als bei herkömmlichen, aus dem Stand der Technik bekannten Formen, die Foliendicke der tiefgezogenen Folien im Bodenbereich der fertigen Form eine zufriedenstellende Dicke aufweist, insbesondere keine Risse oder Brüche oder dergleichen aufweist. Zufriedenstellend meint im Sinne der vorliegenden Erfindung, dass die tiefgezogene Form im Bodenbereich der Formmulde ca. eine Stärke aufweist, welche zumindest 10 bis 30% der Dicke der ursprünglich eingesetzten Kunststofffolie aufweist. Ziehtiefenverhältnis meint das Verhältnis vom Durchmesser der Formmulde zu deren Tiefe. Es ist dem Fachmann bekannt, dass Ziehtiefenverhältnisse von ≤ 1 üblicherweise kaum oder nur sehr schwer realisierbar sind und dass bei diesen Ziehtiefenverhältnissen die Stärke der Kunststofffolien im Bodenbereich üblicherweise unter 5% oder sogar unter 3% der Dicke der ursprünglich eingesetzten Kunststofffolie beträgt. Dies bedeutet, dass in einem Tiefziehverfahren hergestellte Formen mit einem kleinen Ziehtiefenverhältnis von ≤ 1, insbesondere solche Formen, welche mit dünnen Kunststofffolien (Folienstärke von in etwa 250 bis 600 µm) tiefgezogen werden, üblicherweise eine relativ hohe Dicke (ca. 70 bis 90 % der Stärke der Kunststofffolie) in einem oberen Bereich der Formmulde aufweisen, wohingegen der untere Teil der Formen in der Formmulde (Bodenbereich) meist nur äußerst dünn ist (ca. 3 bis 5 % der Stärke der Kunststofffolie). Wie bereits zuvor beschrieben ist dies jedoch unerwünscht und unwirtschaftlich, da eine zu dünne Folie im Bodenbereich zwangsläufig zur Instabilität der Packung, Rissen oder Verformungen und somit zu Ausschluss führen kann.

Die erfindungsgemäße Tiefziehverpackungsmaschine umfasst eine erfindungsgemäße Formstation und in einer bevorzugten Ausgestaltung jeweils eine Heizvorrichtung, eine Befüllungsstation, eine Siegelstation, und eine Schneideeinrichtung, wobei letztere optional eine Querschneideeinrichtung und Längsschneideeinrichtung umfasst. Die Stationen sind entlang einer Arbeitsrichtung an einem Maschinengestell angeordnet. Eingangsseitig der Tiefziehverpackungsmaschine befindet sich an dem Maschinengestell eine Zufuhrrolle für die Kunststofffolie, von der diese abgezogen wird. Die Heizeinrichtung erwärmt die Kunststofffolie, bevor sie der Formstation zugeführt wird, in der die erhitzte Kunststofffolie zu einer fertigen Form tiefgezogen wird.

Weiterhin umfasst die vorliegende Erfindung die Verwendung einer erfindungsgemäßen Tiefziehverpackungsmaschine zum Verpacken von Lebensmitteln.

Die Erfindung wird nachfolgend anhand der folgenden Figuren weiter beispielhaft erläutert. Es zeigen:
**Fig. 1** bis **Fig. 6** schematische Darstellungen eines erfindungsgemäßen Verfahrens zum Tiefziehen einer Kunststofffolie in einer erfindungsgemäßen Formstation;
**Fig. 7** eine schematische Darstellung einer tiefgezogenen Form, welche mittels des erfindungsgemäßen Verfahrens hergestellt wurde.

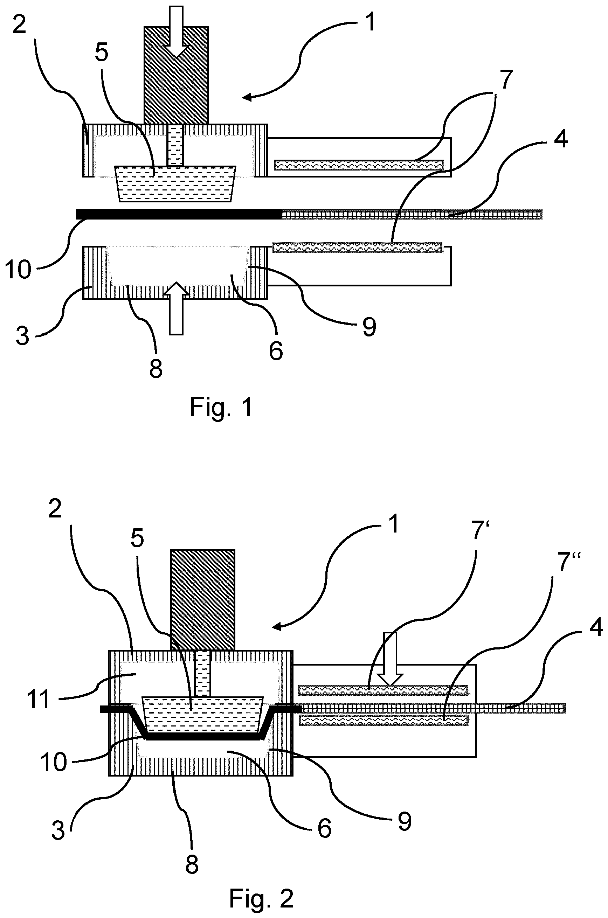

**Fig. 1** zeigt schematisch einen Querschnitt durch eine geöffnete Formstation 1 mit einem Formwerkzeugoberteil 2 und einem Formwerkzeugunterteil 3. In dem ersten Verfahrensschritt ist zwischen Formwerkzeugoberteil 2 und Formwerkzeugunterteil 3 in etwa mittig eine Kunststofffolie 4 angedeutet. Die Kunststofffolie 4 wird auf der Tiefziehverpackungsmaschine (nicht gezeigt) kettengeführt. Das Formwerkzeugoberteil 2 weist in einer festen Beabstandung einen Formstempel 5 auf. Der Formstempel 5 erstreckt sich in Richtung des Formwerkzeugunterteils 3 und erstreckt sich über ein unteres Ende des Formwerkzeugoberteils 2 und befindet sich über der erhitzten Kunststofffolie 10. Unteres Ende des Formwerkzeugoberteils 2 meint das Ende, welches in Richtung des Formwerkzeugunterteils 3 ragt. Im Formwerkzeugunterteil 3 ist eine Formmulde 6 angedeutet. Die Formmulde 6 weist eine Bodenfläche 8 sowie zwei Seitenwände 9 auf. Die Formmulde 6 läuft nach innen konisch zu, weshalb die Seitenwände 9 nicht lotrecht verlaufen. Der Formstempel 5 verläuft analog der Formmulde 6 ebenfalls konisch. Die Pfeile am Formwerkzeugoberteil 2 bzw. am Formwerkzeugunterteil 3 zeigen die Richtung an, in welche sich die Formwerkzeugteile 2, 3 zueinander bewegen. Das Absenken bzw. das Anheben der Formwerkzeuge 2, 3 erfolgt konzertiert. Weiter ist an der Formstation 1 eine Heizvorrichtung 7 mit einer oberen und einer unteren Heizplatte 7', 7" fest angeordnet. Die Heizvorrichtung 7 mit den beiden Heizplatten 7', 7" ist vorgesehen, um einen Abschnitt der Kunststofffolie 4, welcher in einem folgenden, zweiten Taktschritt der Tiefziehverpackungsmaschine der Formstation 1 zugeführt wird, auf eine entsprechende Temperatur zu erhitzen. Die Temperatur ist so gewählt, dass diese es ermöglicht, die dann erhitzte Kunststofffolie 10 in der Formstation 1 tiefzuziehen. In der gezeigten Ausgestaltung wird der obere Teil der Heizvorrichtung 7 mit der oberen Heizplatte 7' zusammen mit dem Formwerkzeugoberteil 2 vertikal abgesenkt, das Formwerkzeugunterteil 3 mit dem unteren Teil der Heizvorrichtung 7 mit der unteren Heizplatte 7" wird vertikal angehoben. In einer anderen, nicht gezeigten Ausgestaltung, ist die Heizvorrichtung 7 nicht mit den Formwerkzeugteilen 2, 3 fest verbunden. Die gezeigte Ausgestaltung mit der fest an den Formwerkzeugteilen 2, 3 angeordneten Heizvorrichtung 7 ist eine optionale Ausgestaltung. In der erfindungsgemäßen Tiefziehverpackungsmaschine ist die Heizvorrichtung 7 vor der Formstation 1 angeordnet, d. h. dass die Kunststofffolie 4 zunächst in der Heizvorrichtung 7 erhitzt wird, bevor diese als erhitzte Kunststofffolie 10 der Formstation 1 zugeführt wird.

**Fig. 2** zeigt schematisch einen Querschnitt durch eine geschlossene Formstation 1. In dem zweiten Verfahrensschritt haben sich die Formwerkzeuge 2, 3 wie in Fig. 1 durch die Pfeile angedeutet, aufeinander zubewegt. Das Formwerkzeugoberteil 2 befindet sich auf dem Formwerkzeugunterteil 3, wobei die erhitzte Kunststofffolie 10 Folie zwischen den Formwerkzeugteilen 2, 3 eingeklemmt ist. Beim Schließvorgang der Formstation 1 (nicht gezeigt) wurde die erhitzte Kunststofffolie 10 zunächst teilweise verformt (nicht gezeigt) und befindet sich nun in einer vorläufigen Form. Die geschlossene Formstation 1 weist einen Formraum 11 auf, welcher durch das Formwerkzeugoberteil 2 und das Formwerkzeugunterteil 3 begrenzt wird. Es ist erkennbar, dass der Formstempel 5, welcher sich in fester Beanstandung zum Formwerkzeugoberteil 2 befindet, das Formwerkzeugunterteil 3 samt der Formmulde 6 nicht berührt. Die Heizvorrichtung 7 weist eine obere und eine untere Heizplatte 7', 7" auf. Ein Pfeil an der oberen Heizplatte 7' der Heizvorrichtung 7 deutet an, dass die obere Heizplatte 7'abgesenkt wird, damit diese in etwa plan auf der Kunststofffolie 4 aufliegt und diesen Abschnitt der Kunststofffolie 4 für einen nächsten Takt erhitzt.

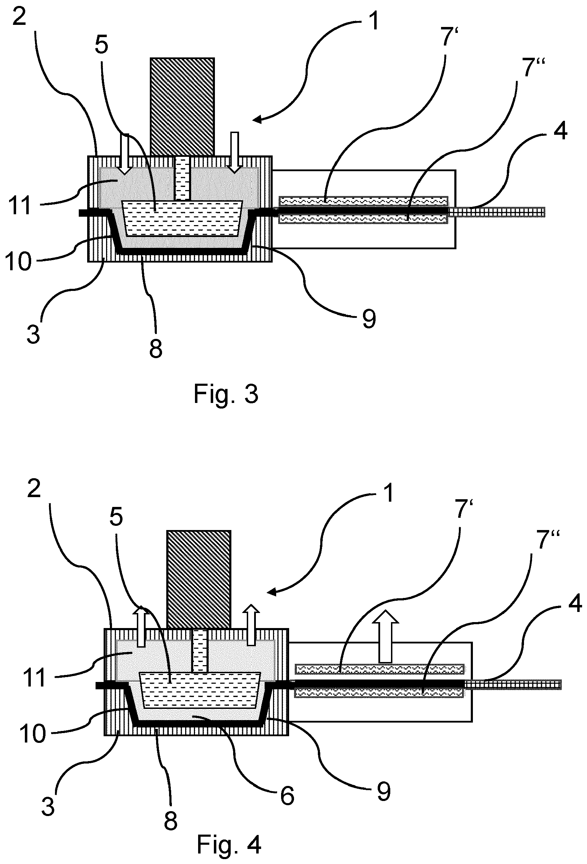

**Fig. 3** zeigt schematisch einen Querschnitt durch eine geschlossene Formstation 1, wobei der Formraum 11 von oben, d. h. vom Formwerkzeugoberteil 2 mit Druckluft beaufschlagt wird, was durch die Pfeile angedeutet wird. In diesem dritten Verfahrensschritt ist die Druckluft auf eine Temperatur erhitzt, welche der Temperatur der erhitzten Kunststofffolie 10 entspricht. Durch das Beaufschlagen des Formraumes 11 mit Druckluft wird die erhitzte Kunststofffolie 10 aus der vorläufigen Form in eine fertige Form 12 übergeführt. Es ist erkennbar, dass die Kunststofffolie 10 an den Seitenwänden 9 und an der Bodenfläche 8 der Formmulde 6 anliegt. Die Form der Formmulde 6 bestimmt die Gestalt der fertigen Form 12.

**Fig. 4** zeigt schematisch einen Querschnitt durch eine geschlossene Formstation 1, wobei der Formraum 11, welcher zuvor mit Druckluft beaufschlagt wurde (siehe Fig. 3), in dem vierten Verfahrensschritt belüftet wird, was durch die Pfeile angedeutet ist. Die Belüftung geschieht im vorliegenden Fall mittels im Formwerkzeugoberteil 2 angeordneter Ventile (nicht gezeigt). Gleichzeitig wird die obere Heizplatte 7' der Heizvorrichtung 7 von der erhitzten Kunststofffolie 10 angehoben, welche in einem anschließenden Takt der Formstation 1 zugeführt und dort geformt beziehungsweise tiefgezogen wird.

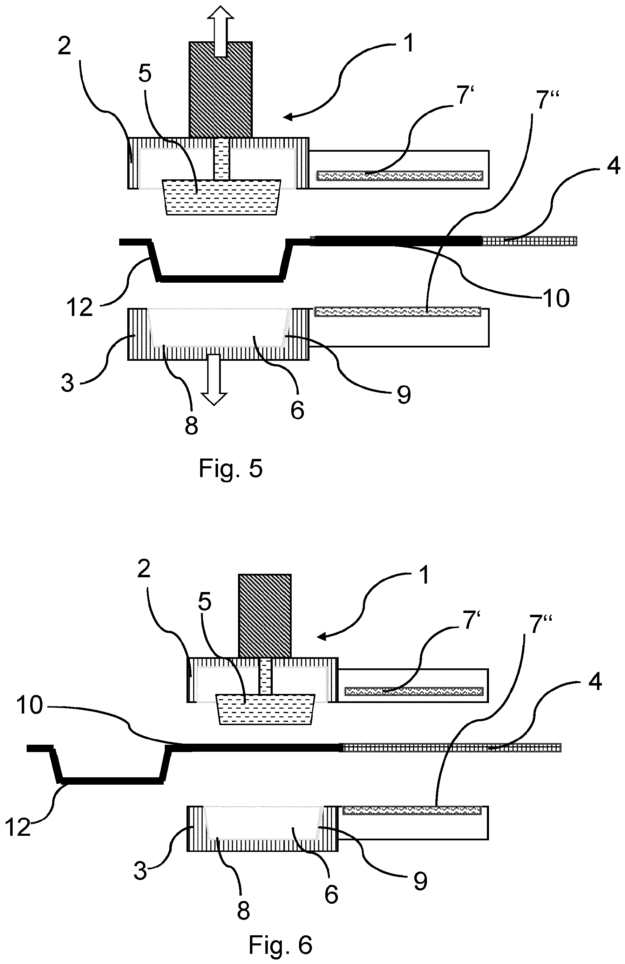

**Fig. 5** zeigt schematisch einen Querschnitt durch eine geöffnete Formstation 1, wobei in dem fünften Verfahrensschritt das Formwerkzeugoberteil 2 angehoben und das Formwerkzeugunterteil 3 abgesenkt wird, wodurch die fertige Form 12 freigelegt wird. Das Absenken bzw. das Anheben der Formwerkzeuge 2, 3 erfolgt vorzugsweise konzertiert.

**Fig. 6** zeigt schematisch einen Querschnitt durch eine geöffnete Formstation 1, wobei der Formstation 1 die zuvor erhitzte Kunststofffolie 10 (siehe vorheriger Verfahrensschritt) zugeführt wird. Nach dem Zuführen der erhitzten Kunststofffolie 10 beginnt das erfindungsgemäße Verfahren erneut mit dem ersten Verfahrensschritt. Gleichzeitig wird in diesem Taktschritt die fertige Form 12 zunächst mittels einer Schneideeinrichtung (nicht gezeigt) von der Folie 4 abgetrennt und anschließend entlang der Strecke der Tiefziehverpackungsmaschine (nicht gezeigt) einer Befüllungsanlage (nicht gezeigt) zugeführt, in welcher die fertige Form 12 mit dem Füllgut befüllt wird.

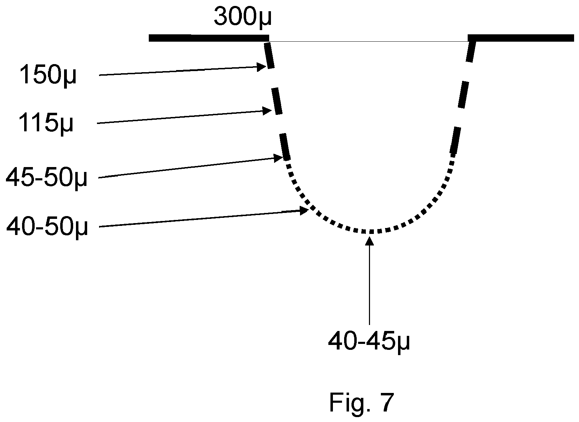

**Fig. 7** zeigt schematisch eine tiefgezogene Form, welche mit dem erfindungsgemäßen Verfahren hergestellt wurde. Die Kunststofffolie, aus welcher die tiefgezogene Form erfindungsgemäß hergestellt wurde, wies eine Folienstärke von 300 µm auf und wurde, bevor diese der Formstation zugeführt wurde, in einem ersten Takt mittels einer der Formstation vorgeschalteten Heizvorrichtung erhitzt. Die Heizvorrichtung hatte eine Temperatur von 145 °C. Die Formmulde des Formwerkzeugunterteils wies eine Napfform auf mit einem Radius von 14,71 mm und einer Tiefe von 28 mm, was einem Ziehtiefenverhältnis von 1,05 entspricht. Die Formmulde wies Seitenschrägen auf, welche zu etwa 10° bis 20° nach innen konisch zulaufen. Die fertige Form hatte in einem oberen Bereich eine Folienstärke von ungefähr 115-150 µm, wohingegen der Bodenbereich der tiefgezogenen Form eine Folienstärke von 40-50 µm aufweist, was in etwa 13 bis 17% der ursprünglichen Folienstärke von 300 µm entspricht. Die Temperatur des Formstempels betrug 130 °C und die hergestellte Form wies keine Risse oder Verformungen auf.

Mit der erfindungsgemäßen Formstation bzw. dem erfindungsgemäßen Verfahren lässt sich die Folienverteilung über Temperatur, Form des Stempels und die Eintauchtiefe des Formstempels in die Kunststofffolie individuell einstellen und anpassen. Insbesondere lässt sich bei Ziehtiefenverhältnissen von ≤ 1 eine hohe Folienstärke in den kritischen Bereichen wie beispielsweise Boden-, Ecken- und Kantenbereichen erzielen, wodurch sich die Folienstärke bzw. Foliendicke der eingesetzte Folie für tiefgezogene Folien reduzieren lässt. Insgesamt kann so mit der erfindungsgemäßen Formstation und dem erfindungsgemäßen Verfahren die Folienstärke gegenüber herkömmlichen Formstationen bzw. bekannten Tiefziehverfahren reduziert werden.

**Bezugszeichenliste:**

| | | | |
|---|---|---|---|
| 1: | Formstation | 7": | untere Heizplatte |
| 2: | Formwerkzeugoberteil | 8: | Bodenfläche der Formmulde |
| 3: | Formwerkzeugunterteil | 9: | Seitenwand der Formmulde |
| 4: | Kunststofffolie | 10: | erhitzte Kunststofffolie |
| 5: | Formstempel | 11: | Formraum |
| 6: | Formmulde | 12: | fertige Form |
| 7: | Heizvorrichtung | | |
| 7': | obere Heizplatte | | |

## Patentansprüche

1. Formstation (1) für eine Tiefziehverpackungsmaschine, umfassend
- ein Formwerkzeugoberteil (2) sowie ein Formwerkzeugunterteil (3),
- wobei das Formwerkzeugoberteil (2) und das Formwerkzeugunterteil (3) jeweils zueinander und auseinander bewegbar sind,
- wobei das Formwerkzeugoberteil (2) einen Formstempel (5) umfasst, welcher bei einer Bewegung des Formwerkzeugoberteils (2) in Richtung des Formwerkzeugunterteils (3) fest beabstandet am Formwerkzeugoberteil (2) angeordnet ist und sich in Richtung des Formwerkzeugunterteils (3) erstreckt und über ein unteres Ende des Formwerkzeugoberteils (2) hinaussteht,
- wobei das Formwerkzeugoberteil (2) und das Formwerkzeugunterteil (3) in Kontakt stehend einen Formraum (11) ausbilden, welcher von dem Formstempel (5) teilweise ausgefüllt wird, und
- wobei der Formraum (11) mit Druck beaufschlagbar ist oder vakuumierbar ist oder beides.

2. Formstation nach Anspruch 1, wobei sich das Formwerkzeugoberteil (2) und das Formwerkzeugunterteil (3) vertikal zueinander bewegen.

3. Formstation nach Anspruch 1 oder 2, wobei der Formstempel (5) beheizbar ist.

4. Formstation nach einem der vorherigen Ansprüche, wobei das Formwerkzeugunterteil (3) beheizbar oder kühlbar oder beides ist, insbesondere kühlbar ist.

5. Formstation nach einem der vorherigen Ansprüche, wobei das Formwerkzeugunterteil wenigstens zwei Formmulden (6) aufweist und das Formwerkzeugoberteil (2) zumindest zwei Formstempel aufweist.

6. Formstation nach einem der vorherigen Ansprüche, wobei der Formstempel (5) und/oder das Formwerkzeugunterteil (3) und/oder die Formmulden (6) beschichtet ist/sind, insbesondere teflonbeschichtet ist/sind.

7. Formstation nach einem der vorherigen Ansprüche, wobei das mit Druck beaufschlagen durch Druckluft erfolgt und die Druckluft erhitzt ist, vorzugsweise über 100°C.

8. Formstation nach einem der vorherigen Ansprüche, wobei der Formstempel (5) mit einem ersten Ende am Formwerkzeugoberteil (2) befestigt ist, wobei vorzugsweise der Formstempel (5) ein dem ersten Ende gegenüberliegendes zweites Ende aufweist, wobei zumindest das zweite Ende über das untere Ende des Formwerkzeugoberteils (2) hinaussteht.

9. Tiefziehverpackungsmaschine, umfassend eine Formstation (1) nach einem der vorherigen Ansprüche.

10. Tiefziehverpackungsmaschine nach Anspruch 9, weiterhin aufweisend eine Heizvorrichtung (7), eine Befüllungsstation, eine Siegelstation und eine Schneideeinrichtung, wobei die Schneideeinrichtung bevorzugt eine Querschneideeinrichtung und Längsschneideeinrichtung umfasst.

11. Verfahren zum Tiefziehen einer Kunststofffolie in einer Formstation (1) nach einem der Ansprüche 1 bis 8, wobei das Verfahren die folgenden Schritte aufweist:
a) Bewegen des Formwerkzeugoberteils (2) in Richtung des Formwerkzeugunterteils (3), wobei eine zwischen dem Formwerkzeugoberteil (2) und Formwerkzeugunterteil (3) angeordnete Folie (4) teilweise durch den Formstempel (5) verformt wird;
b) Bewegen des Formwerkzeugunterteils (3) in Richtung des Formwerkzeugoberteils (2);
c) Schließen des Formwerkzeugoberteils (2) und Formwerkzeugunterteils (3), wobei die zwischen dem Formwerkzeugoberteil (2) und Formwerkzeugunterteil (3) angeordnete teilweise verformte Folie (4) eingeklemmt wird und eine vorläufige Form in dem ausgebildeten Formraum (11) aufweist;
d) Beaufschlagen des Formraumes (11) mit Druck; oder
e) Vakuumieren des Formraumes (11); oder
f) zunächst Schritt d) und anschließend Schritt e), oder zunächst Schritt e) und anschließend Schritt d), oder Schritt d) und Schritt e) konzertiert;
wobei nach Schritt d) oder e) oder f) die Folie eine fertige Form (12) aufweist;
g) ggf. Ausgleichen des Unterdruckes oder des Überdruckes innerhalb des Formraumes (11);
h) Bewegen des Formwerkzeugoberteils (2) entgegengesetzt der Richtung des Formwerkzeugunterteils (3); und
i) Bewegen des Formwerkzeugunterteils (3) entgegengesetzt der Richtung des Formwerkzeugoberteils (2).

12. Verfahren nach Anspruch 11, wobei die Schritte a) und b) und/oder h) und i) konzertiert erfolgen.

13. Verfahren nach Anspruch 11 oder 12, wobei Schritt d) mittels Druckluft erfolgt, vorzugsweise mittels erhitzter Druckluft, wobei die Druckluft bevorzugt eine Temperatur von wenigstens 100°C aufweist.

14. Verfahren nach einem der Ansprüche 11 bis 13, wobei die Folie (4, 10) aufgeheizt ist, vorzugsweise auf wenigstens 100°C.

15. Verwendung einer Tiefziehverpackungsmaschine nach einem der Ansprüche 9 oder 10 zum Verpacken von Lebensmitteln.
